# EUROPÄISCHE PATENTANMELDUNG

(11) **EP 4 033 653 A1**
(43) Veröffentlichungstag der Anmeldung: **27.07.2022**
(21) Anmeldenummer: 22152197.4
(22) Anmeldetag: 19.01.2022
(51) Int. Cl.: H02M 7/483, H02M 1/32

(54) **KASKADIERTER MULTIZELLENUMRICHTER MIT 3-POLIGEN H-BRÜCKEN MIT GETEILTEM ZWISCHENKREISKONDENSATOR**

(30) Priorität: 21.01.2021 DE 102021101261
(71) Anmelder: Technische Universität Kaiserslautern, 67663 Kaiserslautern (DE)
(72) Erfinder: Fang, Jingyang, 67663 Kaiserslautern (DE); Götz, Stefan, 67663 Kaiserslautern (DE)
(74) Vertreter: Patentanwaltskanzlei Vièl & Wieske PartGmbB

(57) **Zusammenfassung**

Um einen mehrstufigen Wandler zu schaffen, der Gleichspannungen ausgleicht, Energiespeicher spart und einen fehlertoleranten Betrieb auf der Basis von kaskadierten Halbbrückenwandlern ermöglicht, wird im Rahmen der Erfindung ein kaskadierter modifizierter Halbbrückenwandler geschaffen, der aus einer Vielzahl von modifiziertenHalbbrückenmodulen besteht, wobei alle Modulausgänge über zwei Stromleitungen in Reihe geschaltet sind und gemeinsam den Wechselstromausgang bilden.

Im Vergleich zum symmetrischen. Halbbrückenmodul verfügt das modifizierte Halbbrückenmodul über zwei zusätzliche Halbleiterschalter. Jedes modifizierte Halbbrückenmodul ist über zwei Anschlüsse und Stromleitungen mit seinem Vorgängermodul verbunden. Außerdem ist jedes modifizierte Halbbrückenmodul über zwei Anschlüsse und Stromleitungen mit dem nachfolgenden Modul verbunden. Auf diese Weise können modifizierte Halbbrückenmodule nicht nur in Reihe, sondern auch parallel zu ihren Nachbarn geschaltet werden, abhängig von Steuerungs- und Modulationsstrategien. Die Parallelisierung von Modulen vereinfacht die Steuerungsarchitekturen von kaskadierten modifizierten Halbbrückenwandlern erheblich. Solange eine Modul-Gleichspannung gut geregelt ist, sind alle Modulspannungen ausgeglichen und gut geregelt.

## Beschreibung

Die Erfindung bezieht sich auf ein elektrisches Wandlersystem, auch Konvertersystem genannt, das aus kaskadierten modifizierten Halbbrückenmodulen besteht.

Elektrische Wechselstrommotoren, wie z. B. in Elektrofahrzeugen, benötigen in der Regel einen Konverter, der die von einer Batterie gelieferte Gleichspannung in eine Wechselspannung umwandelt oder umgekehrt. Darüber hinaus werden verteilte Energieressourcen, wie Photovoltaik und Wind, in der Regel über DC-AC- oder AC-DC20 Leistungswandler an das Netz angebunden. Wenn solche Umrichter ausschließlich zur Blindleistungs- und Spannungskompensation eingesetzt werden, können sie als statische Kompensatoren (STATCOMs) dienen. Typischerweise verwenden Wandler in diesen Anwendungen sogenannte Brückenschaltungen, die die Ausgangsanschlüsse abwechselnd mit einem positiven und einem negativen Pol der Gleichspannungsquelle verbinden. In jedem Schaltzustand wählen die Wandler die Verweildauer so, dass die geforderte Wechselspannung im zeitlichen Mittel entsteht. Eine auf diese Weise erzeugte Wechselspannung hat jedoch eine geringe Qualität und erhebliche Verzerrungen. Zudem entstehen durch die Schaltvorgänge hohe Energieverluste. Weitere Nachteile ergeben sich hinsichtlich der elektromagnetischen Verträglichkeit, da durch die beim Schalten auftretenden hochfrequenten Schaltflanken hohe Energien elektromagnetisch abgestrahlt werden. Zudem erfordern die Schaltungen teure Bauteile, da diese jeweils für die Spitzenspannung ausgelegt werden müssen.

Die genannten Probleme können mit Hilfe von Mehrebenen-Konvertern bekämpft werden.

Multilevelkonverter ermöglichen es, die Ausgangsspannung für eine Last, wie z. B. einen elektrischen Wechselstrommotor, in kleinen Stufen zu erzeugen, was zu weniger Spannungsoberwellen und elektromagnetischen Störungen führt. Durch die richtige Ansteuerung von Schaltelementen können die mit Schaltvorgängen verbundenen Energieverluste minimiert werden. Da mehrere Schalter in Reihe geschaltet werden, ist es möglich, dass Schalter mit niedrigen Nennspannungen hohe Spannungen aufnehmen können. Unter den Mehrpegelwandlern zeichnen sich drei Typen aus. Erstens sind Neutral-point- oder Diode-clamped-Konverter unter anderem aus der wissenschaftlichen Referenz Nabae et al.. (1981) [A. Nabae, I. Takahashi, and H. Akagi (1981). A new neutral-point-clamped PWM inverter, IEEE Transactions on Industrial Application, 17(5):518-523] bekannt. Der zweite Typ bezieht sich auf Flying-Capacitor-Wandler, ausführlich in der wissenschaftlichen Referenz Meynard et al. (1992) [T. A. Meynard and H. Foch (1992). Multi-level conversion: high voltage choppers and voltage-source inverters, IEEE Power Electronics Specialist Conference, 397-403]. Drittens sind kaskadierte Brückenwandler aus der US 3,867,643 A bekannt. Darüber hinaus werden modulare Mehrpegelwandler (MMCs) durch die wissenschaftliche Referenz Marquardt et al. (2003) [R. Marquardt and A. Lesnicar (2003). A new modular voltage source inverter topology, IEEE European Conference on Power Electronics and Applications, 1-10]. MMCs können abgeleitet werden, indem die aktiven Schalter von Standard-Zwei-Pegel-Wandlern durch kaskadierte Brückenwandler ersetzt werden. Daher erben MMCs die Vorteile von kaskadierten Brückenwandlern.

Die DE 101 03 031 B4 offenbart eine grundlegende MMC.

Im Vergleich zu Diode-Clamped-Wandlern und Flying-Capacitor-Wandlern benötigen kaskadierte Brückenwandler oder MMCs die geringste Anzahl zusätzlicher Bauelemente, wie z. B. Klemmdioden und Spannungsausgleichskondensatoren, um die gleichen Spannungspegel zu erreichen. Wie der Name schon sagt, bestehen kaskadierte Brückenwandler aus identischen Modulen. Einzelne Module bestehen aus mindestens einem Energiespeicherelement und mindestens zwei aktiven Schaltelementen. Ein Modul ist elektrisch mit mindestens einem benachbarten Modul verbunden, wobei die elektrische Verbindung während des Betriebs dynamisch veränderlich ist, so dass die Ausgangswechselspannung durch dynamische

Änderung der Verbindung der elektrischen Energiespeicherelemente synthetisiert wird. Nachfolgend soll der Begriff "elektrisches Energiespeicherelement" auch elektrische Energiequellen und -senken umfassen, die sich von elektrischen Energiespeicherelementen lediglich dadurch unterscheiden, dass sie vorzugsweise einen Arbeitsbereich, entweder eine Energieaufnahme oder eine Energieabgabe, ermöglichen. Darüber hinaus müssen die hier bezeichneten elektrischen Energiespeicherelemente nicht unbedingt ideal und damit verlustfrei sein, so dass die entnehmbare Energie geringer sein kann als die zuvor eingespeiste.

Die US 10,442,309 B2 offenbart einen modularen Mehrstufenwandler mit verschiedenen Modultypen, die Batteriezellen als Energiespeicherelemente enthalten.

Die US 10,218,189 B2, die hier durch Verweis aufgenommen werden soll, beschreibt weiter Module, die Ausgleichsschaltungen für eingebaute Batteriezellen enthalten.

Die US 9,496, 799 B2 und die wissenschaftliche Referenzen Goetz et al. (2015) [S.M. Goetz, A. V. Peterchev, and T. Weyh, "Modular Multilevel Converter With Series and Parallel Module Connectivity: Topology and Control," in IEEE Transactions on Power Electronics, vol. 30, no. 1, pp. 203-215, Jan. 2015, doi: 10.1109/TPEL.2014.2310225] sowie Goetz et al. (2017) [S. M. Goetz, Z. Li, X. Liang, C. Zhang, S. M. Lukic, and A. V. Peterchev, "Control of Modular Multilevel Converter With Parallel Connectivity-Application to Battery Systems," in IEEE Transactions on Power Electronics, vol. 32, no. 11, pp. 8381-8392, Nov.2017, doi: 10.1109/TPEL.2016.2645884] weisen Doppel-H-Brückenmodule auf, die mindestens ein Energiespeicherelement und Schaltelemente umfassen, die in mehr als zwei parallel geschalteten Halbbrücken angeordnet sind, und die es ermöglichen, die Energiespeicherelemente benachbarter Module dynamisch und temporär zu verbinden, die in Reihe, parallel oder als Bypass geschaltet werden sollen.

Die US 9,502,960 B2 und die wissenschaftliche Referenz Li et al. (2019) [Z. Li; R. Lizana F., Z. Yu, S. Sha, A. V. Peterchev, and S. M. Goetz, "A Modular Multilevel Series/Parallel Converter for a Wide Frequency Range Operation," in IEEE Transactions on Power Electronics, vol. 34, no. 10, pp. 9854-9865, Oct. 2019, doi: 10.1109/TPEL.2019.2891052] offenbaren H-Brückenmodule mit weniger Transistoren.

Die wissenschaftliche Referenz Lizana et al. (2019) [R. Lizana F., S. Rivera, Z. Li, J. Luo, A. V.Peterchev, and S. M. Goetz, "Modular Multilevel Series/Parallel Converter With Switched-Inductor Energy Transfer Between Modules," in IEEE Transactions on Power Electronics, vol. 34, no. 5, pp. 4844-4852, May 2019, doi: 10.1109/TPEL.2018.2859902] offenbart die induktive Zusammenschaltung von Modulen, was auch für die vorliegende Erfindung gilt.

Die US 2018/0013339 A1 enthüllt weitere Modulschaltungen mit einer reduzierten Anzahl von Schaltelementen.

Die US 8,890,465 B2 beschreibt ein alternatives Modul, das für Motorantriebsanwendungen optimiert ist.

Die wissenschaftliche Referenz Deng et al. (2015) [Y. Deng and R. G. Harley, "Space-Vector Versus Nearest-Level Pulse Width Modulation for Multilevel Converters," in IEEE Transactions on Power Electronics, vol. 30, no. 6, pp. 2962-2974, June 2015, doi: 10.1109/TPEL.2014.2331687] beschreibt Regelverfahren, die Teil der Erfindung sein können.

Die wissenschaftliche Referenz Specht et al. (2017) [E. Specht, C. Aschauer, C. Korte and S. Goetz, "Direct Torque Control with Variable Level Discretization for Automotive Drives," PCIM Europe 2017; International Exhibition and Conference for Power Electronics, Intelligent Motion, Renewable Energy and Energy Management, Nuremberg, Germany, 2017, pp. 1-8., ISBN: 978-3-8007-4424-4] legt ein Regelverfahren offen, das Teil der vorliegenden Erfindung sein kann. Die wissenschaftliche Referenzen Wang et al. (2017) [C. Wang, F. R. Lizana, Z. Li, A. V. Peterchev, and S. M. Goetz, "Submodule short-circuit fault diagnosis based on wavelet transform and support vector machines for modular multilevel converter with series and parallel connectivity," IECON 2017 - 43rd Annual Conference ofthe IEEE Industrial Electronics Society, Beijing, 2017, pp. 3239-3244, doi: 10.1109/1ECON.2017.8216547] und Wang et al. (2019) [C. Wang, A. V. Peterchev, and S. M. Goetz, "Online Switch Open-Circuit Fault Diagnosis Using Reconfigurable Scheduler for Modular Multilevel Converter with Parallel Connectivity," 2019 21st European Conference on Power Electronics and Applications (EPE '19 ECCE Europe), Genova, Italy, 2019, doi: 10.23919/EPE.2019.8915402] offenbaren Regel- und Fehlererkennungsmethoden, die Teil der vorliegenden Erfindung sein können.

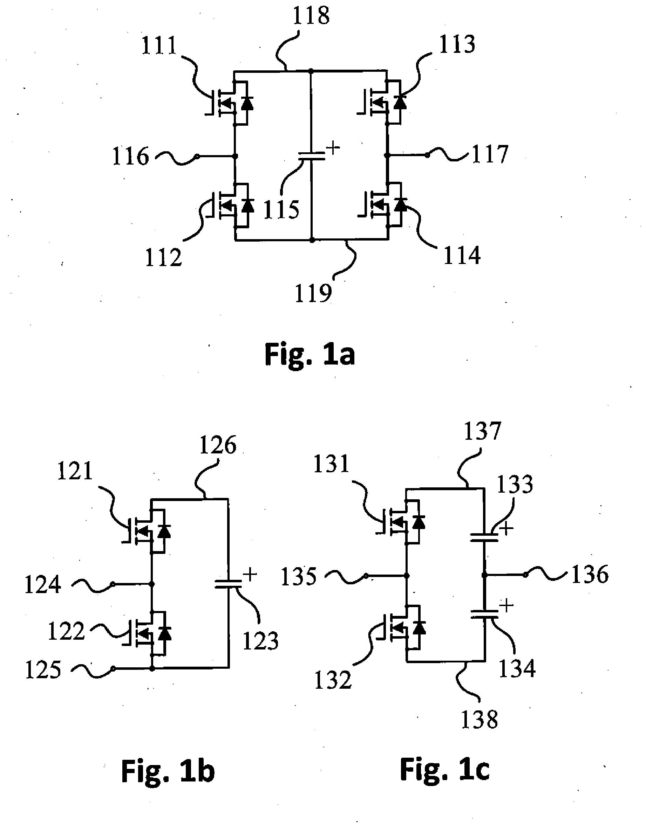

Die beliebtesten Module nach dem Stand der Technik von kaskadierten Brückenwandlern und MMCs sind H-Brückenmodule (siehe Figur 1a) und asymmetrische Halbbrückenmodule (siehe Figur 1b). Im Vergleich dazu überwiegen asymmetrische Halbbrückenmodule gegenüber sogenannten H-Brückenmodulen in Bezug auf die Einfachheit, was sich weiter in geringeren Kosten und Leitungsverlusten sowie in geringerer Systemgröße und geringerem Gewicht niederschlägt, während das Gegenteil in Bezug auf die Modulfunktionalität zutrifft. Konkret erlauben H-Brückenmodule bipolare Ausgänge, während asymmetrische Halbbrückenmodule nur entweder eine positive Oder eine Nullspannung ausgeben können und damit von bestimmten Anwendungen ausgeschlossen sind.

Die wissenschaftlichen Referenzen Fang et al. (2020) [J. Fang, Z. Li and S. Goetz, "Multilevel Converters with Symmetrical Half-Bridge Submodules and Sensorless Voltage Balance," IEEE Transactions on Power Electronics, doi: 10.1109/TPEL.2020.3000469] und [J. Fang, Z. Li, S. Goetz, S. Yang and H. Wang "H-Bridge MMCs with Symmetrical Half-Bridge Submodules," 2020 IEEE Energy Conversion Congress and Exposition (ECCE), doi: 10.1109/ECCE44975.2020.9235447] sowie die DE 10 2019 006 476 A1 offenbaren symmetrische Halbbrückenmodule.

Symmetrische Halbbrückenmodule können als Alternative zu H-Brücken- und asymmetrischen Halbbrückenmodulen dienen. Symmetrische Halbbrückenmodule sind im Vergleich zu asymmetrischen Halbbrückenmodulen flexibler, da sie bipolare Spannungsausgänge ermöglichen. Jedes symmetrische Halbbrücken-Submodul verwendet jeweils nur einen Schalter, um Last-/Netzströme zu leiten und reduziert so die Leitungsverluste im Vergleich zum H-Brücken-Submodul. Darüber hinaus werden bei symmetrischen Halbbrückenmodulen typischerweise nur zwei Schalter verwendet, und im Vergleich zu H-Brückenmodulen werden zwei Schaltelemente eingespart. Mit zunehmender Modulzahl kann fast die Hälfte der Schalter zusammen mit den zugehörigen Steuerschaltungen, wie z. B. Gate-Treibern, eingespart werden. Durch Serienschaltung können symmetrische Halbbrücken-Submodule kaskadierte Halbbrückenwandler bilden.

Kaskadierte Halbbrückenwandler leiden jedoch unter einem gravierenden Problem - dem Ungleichgewicht der oberen und unteren Spannungen der Speicherelemente. Dieses Problem tritt bei Kapazitäts-/Batterie-Fehlanpassungen, Spannungssensor-Offsets und/oder unsachgemäßer Modulation auf. Zu den negativen Folgen des Problems gehören Übermodulation, Stromverzerrung und/oder sogar Fehlfunktionen von Leistungswandlern. Ein weiteres Problem im Zusammenhang mit kaskadierten Halbbrückenwandlern besteht darin, dass Module unter Fehlerbedingungen nicht überbrückt werden können. Außerdem sind Energiespeicherelemente in kaskadierten Halbbrückenwandlern sperrig und teuer, was die Verbesserung von Systemgröße, Gewicht und Kosten begrenzt. In diesem Sinne gibt es eine starke Motivation zur Reduzierung von Energiespeicherelementen.

Die Aufgabe der vorliegenden Erfindung besteht im Wesentlichen in der Realisierung eines mehrstufigen Wandlers, der Gleichspannungen ausgleicht, Energiespeicher spart und einen fehlertoleranten Betrieb auf der Basis von kaskadierten Halbbrückenwandlern ermöglicht.

Diese Aufgabe wird erfindungsgemäß durch ein modulares Multilevelkonvertersystem gemäß Anspruch 1 gelöst.

Im Rahmen der vorliegenden Erfindung wird eine Art von modifizierten Halbbrückenmodulen offenbart. Mindestens zwei modifizierte Halbbrückenmodule bilden durch Serienschaltung kaskadierte modifizierte Halbbrückenwandler. Kaskadierte modifizierte Halbbrückenwandler gleichen bei Bestückung mit dem erfindungsgemäßen Controller ihre Gleichspannungen zwischen den oberen und unteren Energiespeicherelementen sowie den einzelnen Modulen durch Modulparallelisierung aus und vereinfachen dadurch die Steuerungsarchitekturen erheblich.

Darüber hinaus erzielen kaskadierte modifizierte Halbbrückenwandler im Vergleich zu konventionellen kaskadierten Halbbrückenwandlern eine erhebliche Einsparung an Energiespeicherelementen. Darüber hinaus ermöglichen kaskadierte modifizierte Halbbrückenwandler einen fehlertoleranten Betrieb über Bypassing-Module, der mit konventionellen kaskadierten Halbbrückenwandlern nicht erreicht werden kann. Diese Aufgabe wird somit mit Hilfe eines elektrischen Wandlers gelöst, nämlich des kaskadierten modifizierten Halbbrückenwandlers, der aus einer Vielzahl von modifizierten Halbbrückenmodulen besteht, wobei alle Modulausgänge über zwei Stromleitungen in Reihe geschaltet sind und gemeinsam den Wechselstromausgang bilden.

Jedes Modul umfasst eine Vielzahl von Schaltelementen zum dynamischen Umschalten zwischen einer Vielzahl von so genannten Schaltungszuständen (auch Modulzustände oder Verbindungsmodi oder Verbindungsmodi oder Schaltzustände oder Schaltzustände genannt) und mindestens zwei Energiespeicherelemente, wie z. B. Kondensatoren, Batterien oder eine beliebige Mischung aus Kondensatoren und Batterien, auf seiner Gleichstromseite. Bei modifizierten Halbbrückenmodulen ermöglichen sie nicht nur den Normalbetrieb, sondern auch den Überbrückungsbetrieb bei Fehlern. Durch den erfindungsgemäßen Controller ermöglichen modifizierte Halbbrückenmodule serielle und parallele Verbindungen. Insbesondere die Parallelschaltung gewährleistet den Spannungsausgleich und die Einsparung von Energiespeichern auf sensorlose Weise. Weitere Konfigurationen können den abhängigen Ansprüchen und der Beschreibung entnommen werden.

Bei konventionellen kaskadierten Halbbrückenwandlern sind alle Module symmetrische Halbbrückenmodule. Jedes symmetrische Halbbrückenmodul hat zwei Ausgangsspannungspegel, darunter einen positiven und einen negativen Spannungspegel. Daher können symmetrische Halbbrückenmodule nicht mit einem Ausgangsspannungspegel von Null überbrückt werden. Die Regelungsarchitektur konventioneller kaskadierter Halbbrückenwandler ist sehr kompliziert, die aus mindestens n (n steht für die Anzahl der Module) Spannungsreglern besteht, die die Spannungssummen der oberen und unteren Gleichspannungskondensatoren der einzelnen Module regeln sollen. Es gelingt ihnen jedoch nicht, die Spannungsdifferenz zwischen den oberen und unteren Kondensatoren in jedem Modul auszugleichen, was zu Übermodulation, Stromverzerrung und/oder sogar Fehlfunktionen von Leistungsumwandlungssystemen führt.

Im Gegensatz dazu besteht der vorliegend offenbarte kaskadierte modifizierte Halbbrückenwandler aus einer Vielzahl von modifizierten Halbbrückenmodulen. Im Vergleich zum symmetrischen. Halbbrückenmodul verfügt das modifizierte Halbbrückenmodul über zwei zusätzliche Halbleiterschalter. Jedes modifizierte Halbbrückenmodul ist über zwei Anschlüsse und Stromleitungen mit seinem Vorgängermodul verbunden. Außerdem ist jedes modifizierte Halbbrückenmodul über zwei Anschlüsse und Stromleitungen mit dem nachfolgenden Modul verbunden. Auf diese Weise können modifizierte Halbbrückenmodule nicht nur in Reihe, sondern auch parallel zu ihren Nachbarn geschaltet werden, abhängig von Steuerungs- und Modulationsstrategien. Die Parallelisierung von Modulen vereinfacht die Steuerungsarchitekturen von kaskadierten modifizierten Halbbrückenwandlern erheblich. Solange eine Modul-Gleichspannung gut geregelt ist, sind alle Modulspannungen ausgeglichen und gut geregelt.

Im Normalbetrieb regelt der erfindungsgemäße Regler kaskadierte modifizierte Halbbrückenwandler auf einfache Weise. Für jedes modifizierte Halbbrückenmodul schalten die beiden aktiven Hauptschalter, die von herkömmlichen symmetrischen Halbbrückenmodulen übernommen wurden, identisch zu denen herkömmlicher symmetrischer Halbbrückenmodule ein und aus.

Darüber hinaus hängt die Schaltung der beiden zusätzlichen aktiven Schalter von der Funktion der aktiven Hauptschalter des nachfolgenden Moduls ab. Es gibt zwei Möglichkeiten. Wenn sich erstens der obere aktive Hauptschalter des folgenden Moduls einschaltet, während sich der untere aktive Hauptschalter des folgenden Moduls ausschaltet, sollte sich der obere zusätzliche aktive Schalter bei eingeschaltetem unterem zusätzlich aktivem Schalter ausschalten. Auf diese Weise werden das obere Energiespeicherelement des Untermoduls (i+I) und das untere Energiespeicherelement des Untermoduls (i) parallel geschaltet. Wenn sich zweitens der obere aktive Hauptschalter des folgenden Moduls ausschaltet, während sich der untere aktive Hauptschalter des folgenden Moduls einschaltet, sollte sich der obere zusätzliche aktive Schalter bei ausgeschaltetem unterem zusätzlich aktivem Schalter einschalten. Auf diese Weise werden das untere Energiespeicherelement des Untermoduls (i+I) und das obere Energiespeicherelement des Untermoduls (i) parallel geschaltet. Aüf diese Weise sollten alle diagonalen Energiespeicherelemente aufgrund der Modulparallelisierung nach einer Schaltperiode identische Spannungen aufweisen.

Um alle Spannungen der Energiespeicherelemente vollständig auszugleichen, wird nur ein Spannungsregler benötigt. Infolgedessen ist die Steuerungsarchitektur von kaskadierten modifizierten Halbbrückenwandlern im Vergleich zu kaskadierten Halbbrückenwandlern stark vereinfacht. Die meisten Spannungsregler und Sensoren sind entfernt.

Bei einem Fehler an den Hauptschaltern des Moduls (i) gibt es zwei Möglichkeiten, das Modul zu umgehen. Erstens schalten sich die beiden unteren aktiven Schalter, einschließlich eines aktiven Hauptschalters und eines zusätzlichen aktiven Schalters, ein, während sich die verbleibenden oberen aktiven Schalter ausschalten. Zweitens, die beiden oberen aktivenSchalter, einschließlich eines aktiven Hauptschalters und eines zusätzlichen aktiven Schalters, schalten sich ein, während die verbleibenden unteren aktiven Schalter sich ausschalten. Diese Optionen führen zur Umgehung des Moduls (i). Um Kurzschlüsse zu vermeiden, sollten die Schalter benachbarter Module, einschließlich der Hauptschalter des Moduls (i+I) und der zusätzlichen Schalter des Moduls (i-1), ausgeschaltet bleiben. Sie arbeiten gemeinsam an der Umgehung des Moduls (i). Bei einem Kurzschluss der zusätzlichen Schalter des Moduls (i) können alle Schalter weiterhin wie zuvor funktionieren, jedoch ohne Parallelität.

Durch Berechnung von Kondensatorspannungswelligkeiten, z. B. in STATCOM-Anwendungen, wird festgestellt, dass kaskadierte modifizierte Halbbrückenwandler im Vergleich zu konventionellen Halbbrückenwandlern eine signifikante Einsparung von Kapazitäten ermöglichen. Bei einer geraden Anzahl von Modulen ist eine mindestens vierfacheKapazitätsersparnis zu erwarten. Bei einer ungeraden Anzahl von Modulen steht die Einsparung im Verhältnis zur Anzahl der Module. In günstigen Fällen ist eine mehr als zehnfache Einsparung von Kapazität und gespeicherter Energie möglich.

Nach der vorliegenden Erfindung kann der kaskadierte modifizierte Halbbrückenwandler als eine Verbesserung des konventionellen kaskadierten Halbbrückenwandlers angesehen werden. Ersterer behebt Spannungsungleichgewicht und Modulüberbrückungsprobleme und reduziert den Energiespeicherbedarf des letzteren.

Vorteilhafte Ausgestaltungen der Erfindung sind aus den Unteransprüchen ersichtlich.

Es versteht sich von selbst, dass die oben genannten und die im Folgenden noch zu erklärenden Merkmale nicht nur in der jeweils angegebenen Kombination, sondern auch in anderen Kombinationen oder für sich allein verwendet werden können, ohne vom Anwendungsbereich der vorliegenden Erfindung abzuweichen.

Nachfolgend wird die Erfindung anhand von Ausführungsbeispielen schematisch dargestellt und anhand der Zeichnungen schematisch und ausführlich beschrieben.
Figur 1a zeigt ein H-Brücken-Modul aus dem Stand der Technik.
Figur 1b zeigt ein asymmetrisches Halbbrückenmodul aus dem Stand der Technik.
Figur 1c zeigt ein symmetrisches Halbbrückenmodul.
Figur 1d zeigt ein Beispiel für ein modifiziertes Halbbrückenmodul nach Aspekten der Erfindung.
Figur 1e zeigt ein Beispiel für ein modifiziertes Halbbrückenmodul nach Aspekten der Erfindung.
Figur 2 zeigt eine kaskadierte Halbbrückenwandlerschaltung.
Figur 3 zeigt ein Beispiel für einen nach erfindungsgemäßen Gesichtspunkten modifizierten Halbbrückenwandler.
Figur 4a zeigt ein Beispiel für ein Modulationssignal von modifizierten Halbbrückenmodulen nach erfindungsgemäßen Gesichtspunkten.
Figur 4b zeigt ein Beispiel für Gate-Signale von modifizierten Halbbrückenmodulen nach erfindungsgemäßen Gesichtspunkten.
Figur 5a zeigt ein Beispiel für den Betrieb der Modulparallelisierung von kaskadierten modifizierten Halbbrückenumrichtern nach erfindungsgemäßen Gesichtspunkten.
Figur 5b zeigt ein Beispiel für einen Modulparallelisierungsbetrieb von kaskadierten modifizierten Halbbrückenwandlern nach erfindungsgemäßen Gesichtspunkten.
Figur 6 zeigt eine beispielhafte Steuerungsarchitektur von kaskadierten modifizierten Halbbrückenwandlern, die als STATCOMs nach erfindungsgemäßen Gesichtspunkten arbeiten.
Figur 7a zeigt ein Beispiel für einen fehlertoleranten Betrieb von kaskadierten modifizierten Halbbrückenwandlern nach erfindungsgemäßen Gesichtspunkten.
Figur 7b zeigt ein Beispiel für einen fehlertoleranten Betrieb von kaskadierten modifizierten Halbbrückenwandlern nach erfindungsgemäßen Gesichtspunkten.
Figur 8a zeigt beispielhaft Lade- und Entladebedingungen von kaskadierten modifizierten Halbbrückenwandlern nach erfindungsgemäßen Gesichtspunkten.
Figur 8b zeigt ein Beispiel für ein Kapazitätsreduktionsverhältnis *C_{dc wi}*/*C*_{*dc*_{*-*wo}} als Funktion der Anzahl der Teilmodule n und der Gleichspannungsreferenz V_{dc_ref} bei konstanter Wechselspannung nach erfindungsgemäßen Gesichtspunkten.
Figur 9a zeigt simulierte Gleichspannungen eines konventionellen kaskadierten Halbbrückenwandlers mit drei Modulen als STATCOM.
Figur 9b zeigt simulierte Gleichspannungen eines kaskadierten modifizierten, Halbbrückenwandlers mit drei Modulen als STATCOM nach erfindungsgemäßen Gesichtspunkten.
Figur 10a zeigt simulierte Gleichspannungen eines konventionellen kaskadierten Halbbrückenwandlers mit vier Modulen als STATCOM.
Figur 10b zeigt simulierte Gleichspannungen eines kaskadierten modifizierten Halbbrückenwandlers mit vier Modulen als STATCOM und zehnfacher Kapazitätsreduzierung nach erfindungsgemäßen Gesichtspunkten.
Figur 10c zeigt simulierte Wechselspannung und -strom eines kaskadierten modifizierten Halbbrückenwandlers mit vier Modulen als STATCOM nach erfindungsgemäßen Gesichtspunkten.
Figur 11a zeigt simulierte Gleichspannungen eines kaskadierten modifiziertenHalbbrückenwandlers als STATCOM mit Fehlerbetrieb nach erfindungsgemäßen Gesichtspunkten.
Figur 11b zeigt simulierte Wechselspannung und -strom eines kaskadierten modifizierten Halbbrückenwandlers als STATCOM mit Fehlerbetrieb nach erfindungsgemäßen Gesichtspunkten.
Figur 12a zeigt experimentelle Gleichspannungen eines kaskadierten modifizierten Halbbrückenwandlers als STATCOM mit einer Stromreferenzveränderung nach erfindungsgemäßen Gesichtspunkten.
Figur 12b zeigt experimentelle Wechselspannung und -strom eines kaskadierten modifizierten Halbbrückenwandlers als STATCOM mit einer Stromreferenzveränderung nach erfindungsgemäßen Gesichtspunkten.

Das elektrische Wandlersystem nach erfindungsgemäßen Gesichtspunkten verwendet mehrere modifizierte Halbbrückenmodule zur Erzeugung variabler mehrstufiger Ausgangsspannungen und/oder zur Energieübertragung zwischen den elektrischen Energiespeicherelementen in Modulen. Das erfindungsgemäße Wandlersystem bezieht sich auch auf den sogenannten kaskadierten modifizierten Halbbrückenwandler. Der kaskadierte modifizierte Halbbrückenwandler kann entweder in einer einphasigen, einer dreiphasigen oder allgemein in einer n-phasigen Ausführung und mit Batteriespeicherelementen, Kondensatorspeicherelementen oder einer beliebigen Mischung davon ausgeführt werden. In diesem Zusammenhang ist es vorteilhaft, dass die mindestens zwei Energiespeicherelemente mindestens ein erstes Energiespeicherelement, das ein Kondensator ist, und mindestens ein zweites Energiespeicherelement, das eine Batterie ist, umfassen. Es findet in der Praxis kein Stromstoß beim Zusammenschalten von zwei Kondensatoren oder Batterien statt, weil parasitäre Eigenschaften der Implementierung (das ist insbesondere die parasitäre Induktivität, die die Leiter zwangsläufig haben und dreistellige nH bis µ erreicht; diese müssen jedoch nicht gezielt als Element verbaut werden) dies bei ausreichend schnellem Schalten verhindern. Daher ist eine Parallelschaltung auch ohne strombegrenzende Maßnahmen möglich.

Die optionale Möglichkeit, mindestens eine Batterie mit mindestens einem Kondensator in einem Modul zu kombinieren, ermöglicht es z. B., teure Batteriezellen in einem System einzusparen und dennoch Spannungen zu erzeugen, die deutlich höher sind als die Summe der Spannungen aller Batterien.

Der kaskadierte modifizierte Halbbrückenwandler kann als eine Variante des kaskadierten Halbbrückenwandlers betrachtet werden, bei der zumindest einige symmetrische Halbbrückenmodule durch modifizierte Halbbrückenmodule ersetzt werden. Die genannten Wandlerschaltungen sind modular aufgebaut. Das heißt, sie bestehen aus einer Vielzahl von Modulen, die über mindestens zwei Stromleitungen miteinander verbunden sind, wobei die Module mindestens zwei elektrische Energiespeicherelemente und mindestens vier elektronische Schaltelemente aufweisen. Durch geeignete Ansteuerung der Schaltelemente einzelner Module können die Energiespeicherelemente entweder in Reihe oder parallel mit anderen Modulen, in der Regel den Nachbarn, elektrisch verbunden oder von anderen Modulen elektrisch isoliert werden. Je nach Ausführungsform der Module können diese elektrischen Verbindungen individuell für die jeweiligen nergiespeicherelemente ausgeführt werden.

Figur 1a zeigt das sogenannte H-Brücken-Modul aus dem Stand der Technik. Das H-BrückenModul besteht aus einem elektrischen Energiespeicherelement 115 und vier aktiven Schaltelementen 111, 112, 113, 114, die jeweils aus einem Transistor und einer Diode bestehen, sowie aus den Klemmen 116, 117. Die Grundfunktion des H-Brückenmoduls wird durch entsprechende Aktivierung der aktiven Schaltelemente 111, 112, 113 und 114 erreicht.

Das H-Brücken-Submodul verfügt über drei verschiedene Schaltzustände, die bestimmen, wie das Energiespeicherelement eines Moduls vorübergehend mit denen benachbarter Module verbunden wird. Der positive Ausgangsschaltzustand wird durch Einschalten der Schaltelemente 111, 114 bei gleichzeitigem Ausschalten der Schaltelemente 112, 113 erreicht.

In diesem Fall ist die Spannung an den Klemmen 116, 117 positiv. Der zweite Schaltzustand, nämlich der negative Ausgangs-Schaltzustand, wird erreicht, wenn die Schaltelemente 111, 114 ausgeschaltet sind, während die Schaltelemente 112, 113 eingeschaltet sind. Wenn die Schaltelemente 111, 113 oder 112, 114 gleichzeitig eingeschaltet werden, tritt an den Klemmen 116, 117 keine Spannungsdifferenz auf. Mit anderen Worten, das elektrische Energiespeicherelement wird in diesem Fall überbrückt. Daher kann das Energiespeicherelement in einem H-Brücken-Modul entweder mit entsprechenden elektrischen Energiespeicherelementen benachbarter Module in Reihe geschaltet oder aus dem Stromkreis entfernt werden. Damit ermöglicht das H-Brücken-Modul flexible bipolare Ausgänge.

Figur 1b zeigt das sogenannte asymmetrische Halbbrückenmodul aus dem Stand der Technik.

Das asymmetrische Halbbrückenmodul besteht aus einem elektrischen Energiespeicherelement 123 und zwei aktiven Schaltelementen 121 und 122, die jeweils aus einem Transistor und einer Diode bestehen, sowie aus den Klemmen 124, 125. Es ist klar, dass das asymmetrische Halbbrückenmodul im Vergleich zum H-Brückenmodul einfacher ist. Das asymmetrische Halbbrückenmodul weist zwei verschiedene Schaltzustände auf. Der positive Ausgangs-Schaltzustand wird durch Einschalten des Schaltelements 121 bei gleichzeitigem Ausschalten des Schaltelements 122 erreicht. In diesem Fall ist die Spannung an den Klemmen 124, 125 positiv. Der zweite Schaltzustand, oder der Schaltzustand mit Nullausgang, wird erreicht, wenn das Schaltelement 121 ausgeschaltet und währenddessen das Schaltelement 112 eingeschaltet wird. Daher kann das Energiespeicherelement in einem asymmetrischen Halbbrückenmodul entweder mit entsprechenden elektrischen Energiespeicherelementen benachbarter Module in Reihe geschaltet oder aus dem Stromkreis entfernt werden. Das asymmetrische Halbbrückenmodul ermöglicht nur unipolare Ausgänge.

Figur 1c zeigt das symmetrische Halbbrückenmodul. Das symmetrische Halbbrückenmodul besteht aus zwei elektrischen Energiespeicherelementen 133 und 134 sowie zwei Schaltelementen 131 und 132, die jeweils aus einem Transistor und einer Diode bestehen, sowie aus den Anschlüssen 135, 136. Das symmetrische Halbbrückenmodul weist zwei verschiedene Schaltzustände auf. Für den positiven Ausgangs-Schaltzustand ist das High-Side Schaltelement 131 eingeschaltet, während ein Low-Side-Schaltelement 132 ausgeschaltet ist. In diesem Fall erscheint eine positive AC-Ausgangsspannung des Energiespeicherelements 133 an den Klemmen 135, 136. Entsprechend ist für den negativen Ausgangs-Schaltzustand, in dem die Schaltzustände vertauscht sind, die negative Spannung des Energiespeicherelements 134 zu erwarten. Das symmetrische Halbbrückenmodul spart im Vergleich zum H-Brückenmodul zwei Schaltelemente ein. Das symmetrische Halbbrückenmodul ermöglicht bipolare Ausgänge. Allerdings kann das symmetrische Halbbrückenmodul aufgrund des fehlenden Nullspannungszustandes nicht überbrückt werden.

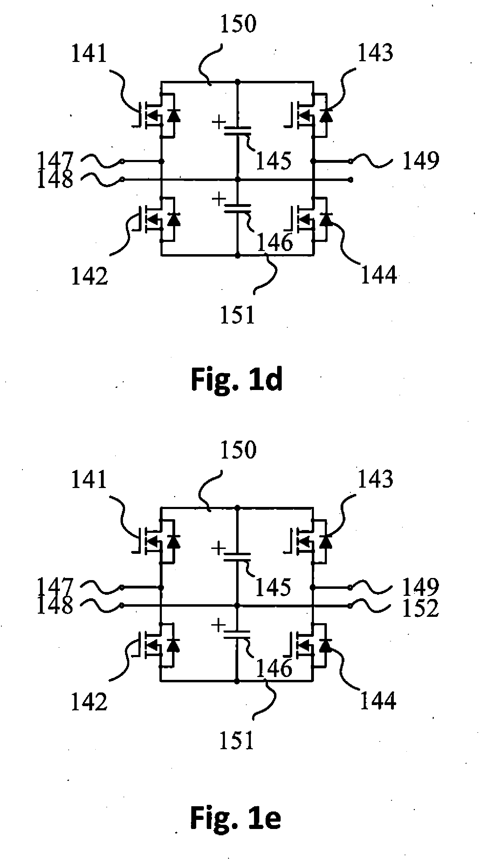

Figuren 1d und 1e zeigen das erfindungsgemäße modifizierte Halbbrückenmodul. Das modifizierte Halbbrückenmodul umfasst mindestens zwei elektrische Energiespeicherelemente 145 und 146 sowie mindestens vier aktive Schaltelemente 141, 142, 143 und 144, die jeweils mindestens einen Transistor und mindestens eine Diode umfassen, und mindestens drei Anschlüsse 147, 148 und 149. Eine Klemme 148 kann ferner in mindestens zwei Teile aufgeteilt werden, um mindestens zwei Klemmen zu bilden. Im Vergleich zu dem in Figur 1c gezeigten symmetrischen Halbbrückenmodul fügt das modifizierte Halbbrückenmodul mindestens zwei zusätzliche aktive Schalter und mindestens einen Anschluss hinzu. Im Allgemeinen werden die mindestens zwei geerbten aktiven Schalter als Hauptschalter bezeichnet, die analog zu denen von symmetrischen Halbbrückenmodulen funktionieren, während die mindestens zwei zusätzlichen aktiven Schalter zusätzliche Flexibilität im Betrieb, insbesondere bei der Modulparallelisierung, ermöglichen.

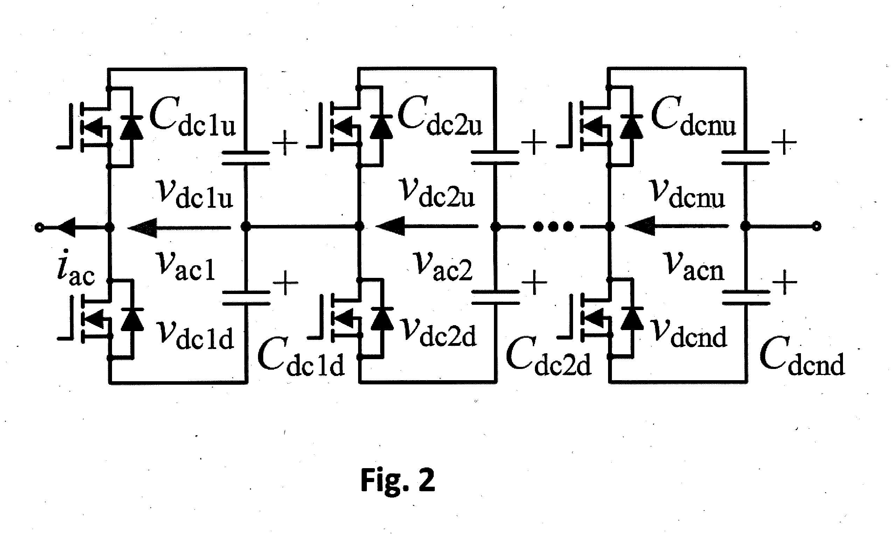

Figur 2 zeigt eine einphasige Verkörperung der kaskadierten Halbbrückenwandlerschaltung, wobei i_{ac} den Netz-/Laststrom bezeichnet. Im Allgemeinen enthält der kaskadierte Halbbrückenwandler mindestens zwei symmetrische Halbbrückenmodule in Figur 1c. Eine Obergrenze ist hier nicht vorgegeben, sondern ergibt sich meist aus den Anforderungen der Schaltung. Beim kaskadierten Halbbrückenwandler sind alle Halbbrückenmodule über ihre elektrischen Anschlüsse 135 und 136 in Reihe geschaltet. Die gesamte Ausgangswechselspannung, die sich aus allen Ausgangsspannungen der einzelnen Module zusammensetzt (V_{ac} = V_{ac1} + V_{ac2} + ... + V_{acn}) erscheint über die externen Anschlüsse. Normalerweise werden alle Gleichstrom-Kondensatorspannungen so geregelt, dass sie identisch sind, nämlich V_{dciu} = V_{dcid} = V_{dci} (i = 1, 2, ..., n). Das Ungleichgewicht der oberen und unteren Kondensator-Gleichspannungen, nämlich v_{dcid} ≠v_{dcid}, kann jedoch ein ernsthaftes Problem bei kaskadierten Halbbrückenwandlern sein. Dieses Problem wird durch Kapazitätsfehlanpassungen, Spannungssensor-Offsets und/oder unsachgemäße Modulation verursacht. Zu den negativen Folgen des Problems gehören Übermodulation, Stromverzerrung und/oder sogar Fehlfunktionen von Leistungswandlersystemen. Die Lösung über die Einspeisung einer Gleichstromkomponente in den netzgekoppelten Wechselstrom kann in kaskadierten Halbbrückenwandlern nicht verwendet werden. Das liegt daran, dass die Gleichstromkomponente des Netzstroms nur einen Grad an Regelfreiheit bietet, der nicht ausreicht, um alle oberen und unteren Kondensatorspannungen auszugleichen. Der kaskadierte Halbbrückenwandler stellt den Stand der Technik dar und kann nach erfindungsgemäßen Gesichtspunkten mit dem erfindungsgemäßen kaskadierten modifizierten Halbbrückenwandler verglichen werden. Eine Erhöhung oder Verringerung der Anzahl der Stufen kann durch Hinzufügen bzw. Entfernen von Modulen erreicht werden.

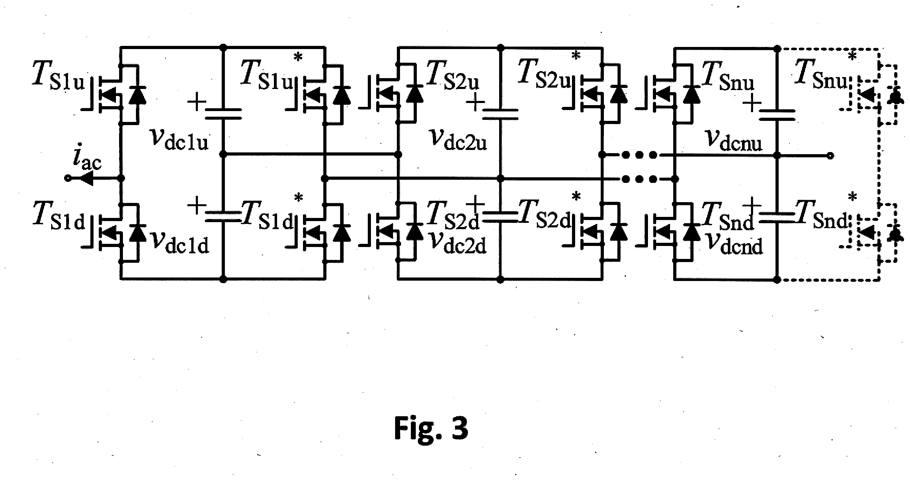

Figur 3 zeigt eine einphasige Verkörperung der erfundenen kaskadierten modifizierten Halbbrücken-Wandlerschaltung nach erfindungsgemäßen Gesichtspunkten. Der kaskadierte modifizierte Halbbrückenwandler besteht aus einer Vielzahl von modifizierten Halbbrückenmodulen in Figur 1d, die über ihre elektrischen Anschlüsse 147, 148 und 149 in Reihe geschaltet sind. Die Schalter Tₛₙᵤ* und T_{snd}* des letzten Moduls können zur Vereinfachung entfernt werden. Das nach erfindungsgemäßen Gesichtspunkten kaskadierte modifizierte Halbbrückenwandlersystem bietet Vorteile, die zur Parallelschaltung und Umgehung von Modulen führen. In Figur 3 ist zu beachten, dass die mindestens zwei Energiespeicherelemente in jedem Halbbrückenmodul aus Batterie-Energiespeicherelementen, Kondensator-Energiespeicherelementen oder einer beliebigen Mischung davon bestehen können, wobei die Nennspannung des einenEnergiespeicherelements weniger als drei Viertel der Nennspannung des anderen Energiespeicherelements betragen kann.

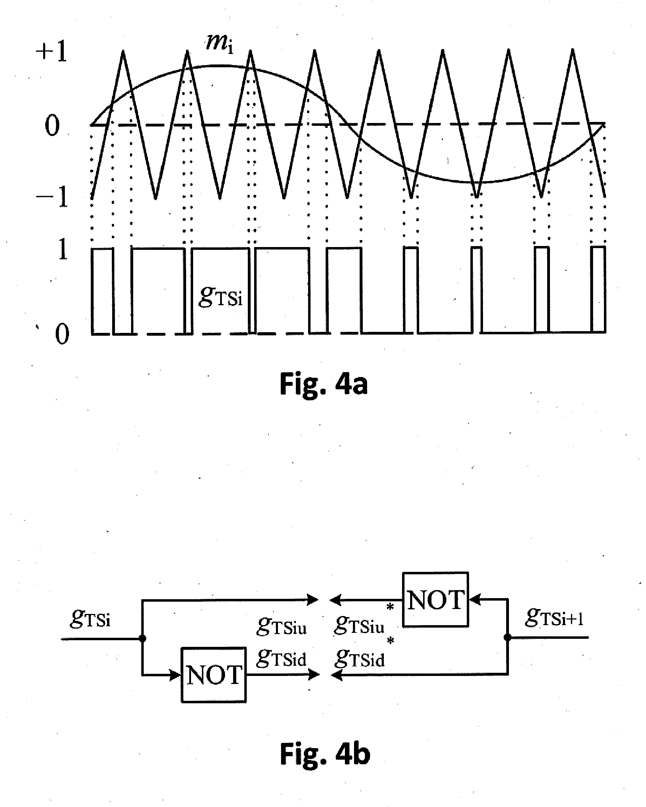

Figur 4a zeigt das Modulationssignal von modifizierten Halbbrückenmodulen. Die Modulationswelle mi und die Trägerwelle, die eine symmetrische Dreieckswellenform aufweist, werden verglichen, wobei eine pulsbreitenmodulierte Wellenform g_{TSi} erzeugt wird. Das Modulationssignal g_{TSi} erzeugt die Gate-Signale zur Ansteuerung der entsprechenden aktiven Schalter.

Figur 4b zeigt die Gate-Signale von modifizierten Halbbrückenmodulen. Nach der Modulationtreibt das Gate-Signal g_{TSi} (oder g_{TSiu}) den entsprechenden oberen Schalter T_{Siu}, während sein komplementäres Signal g_{TSid} den unteren Schalter T_{Sid} treibt. Die Gate-Signale g_{TSiu} und g_{TSid}* steuern die zusätzlichen Schalter in Figur 3. Bemerkenswerterweise leitet das erfindungsgemäße Modulationsschema g_{TSiu}* und g_{TSid}* direkt aus dem Gate-Signal g_{TS(i+1)} eines benachbart folgenden Submoduls ab, was anzeigt, dass kein zusätzlicher Controller für die zusätzlichen aktiven Schalter erforderlich ist, was wiederum den Steuerungsaufwand erheblich reduziert. Hierbei ist zu beachten, dass in der Praxis Totzeiten zwischen oberen und unteren Schalterpaaren eingefügt werden.

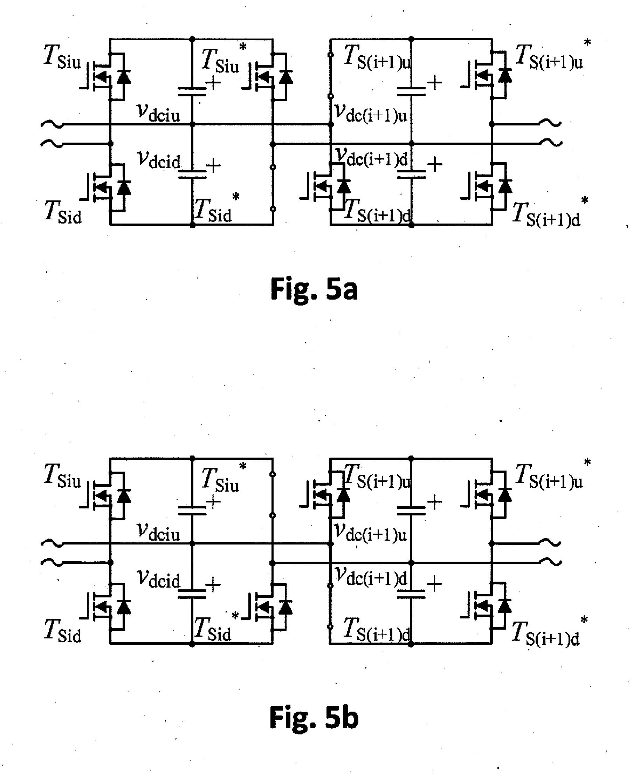

Figur 5a zeigt den ersten Modulparallelisierungszustand von kaskadierten modifizierten Halbbrückenwandlern nach erfindungsgemäßen Gesichtspunkten, wobei zwei benachbarte Module eingebaut sind. Wie gezeigt, werden beim Einschalten von T_{S(i+1)u} und T_{Sid}* (bei ausgeschaltetem T_{Siu}* und T_{S(i+1)d}) der obere Kondensator des Submoduls (i+I) und der untere Kondensator des Submoduls (i) parallel geschaltet. Diese Parallelschaltung löscht die Spannungsdifferenz zwischen V_{dc(i+1)u} und V_{dcid}, wodurch V_{dcid} = V_{dc(i+1)u} wird.

Figur 5b zeigt den zweiten Modulparallelisierungszustand von kaskadierten modifizierten Halbbrückenwandlern nach erfindungsgemäßen Gesichtspunkten, bei dem zwei benachbarte Module eingebaut sind. Wie gezeigt, werden beim Einschalten von T_{S(i+1}und T_{Siu}* (bei ausgeschaltetem T_{Sid}* und der obere Kondensator des Submoduls (i) und der untere Kondensator des Submoduls (i+I) parallel geschaltet. Diese Parallelschaltung löscht die Spannungsdifferenz zwischen V_{dciu} und V_{dci}, wodurch V_{dciu} = V_{dci(i+1)d} wird. In jeder Schaltperiode werden T_{Siu} und T_{Sid} (i = 1, 2, ... , n) einmal ein- und einmal ausgeschaltet, wodurch die Spannungen der Diagonalkondensatoren gleich gemacht werden, nämlich V_{dc1u} = V_{dc2d} = V_{dc3u} = V_{dc4d} = V_{dc(2k+1)u} = V_{dc(2k+2)d} und V_{dc1d} = V_{dc2u} = V_{dc3d} = V_{dc4u} = = V_{dc(2k+1)d} = V_{dc(2k+2)u}.

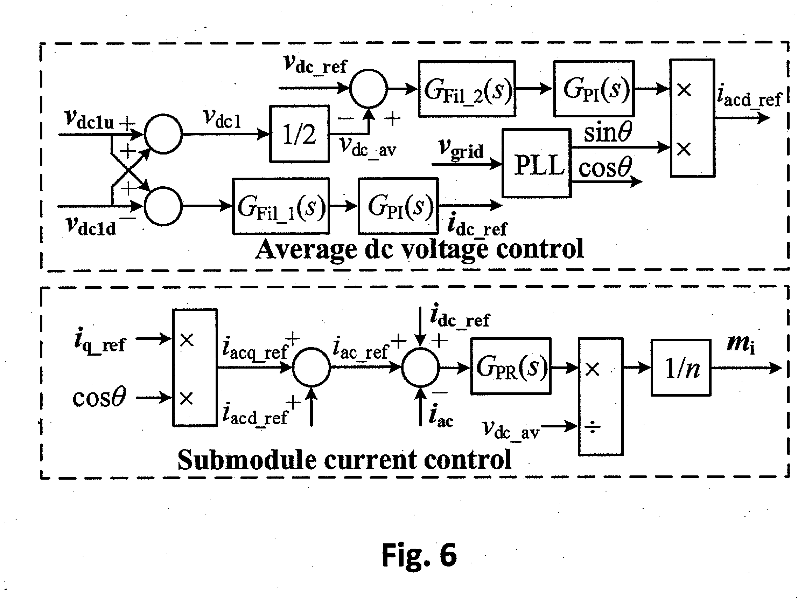

Figur 6 zeigt die erfindungsgemäße Regelungsarchitektur von kaskadierten modifizierten Halbbrückenwandlern, die nach erfindungsgemäßen Gesichtspunkten als STATCOMs arbeiten, wobei die Eingangs-Referenzsignale V_{dc_ref} und i_{q_ref} auf Gleichspannungskondensatorspannungen bzw. Blindstrom zielen. Es wird die Netzspannung Vgrid erfasst, die eine Phasenregelschleife (PLL) durchläuft, woraus sich die Phasenwinkelinformation ergibt. Darüber hinaus stehen G_{PI}(s), G_{PR}(s), G_{Fil_2}(s) und G_{Fil_3}(s) für die komplexen Übertragungsfunktionen im Frequenzbereich von Proportional-Integral-Reglern (PI), Proportional-Resonanz-Reglern (PR), Kerbfiltern, die auf die Grundfrequenz abgestimmt sind, bzw. Kerbfiltern, die auf die zweite Harmonische abgestimmt sind. Die Ausgangssignale mi dienen als Eingangsmodulationssignale, wie in Figur 4a dargestellt.

Die dargestellte Regelungsarchitektur ist im Vergleich zu der von kaskadierten Halbbrückenwandlern stark vereinfacht, da die meisten Spannungsregler für die Einzelkondensator-Spannungsregelung entfernt wurden, mit Ausnahme eines Reglers, der die Gleichspannungsnachführung gewährleistet. Mit dem einzigen Spannungsregler werden alle Kondensatorspannungen entzerrt, nämlich V_{dciu} = V_{dcid} (i = 1, 2, .., n).

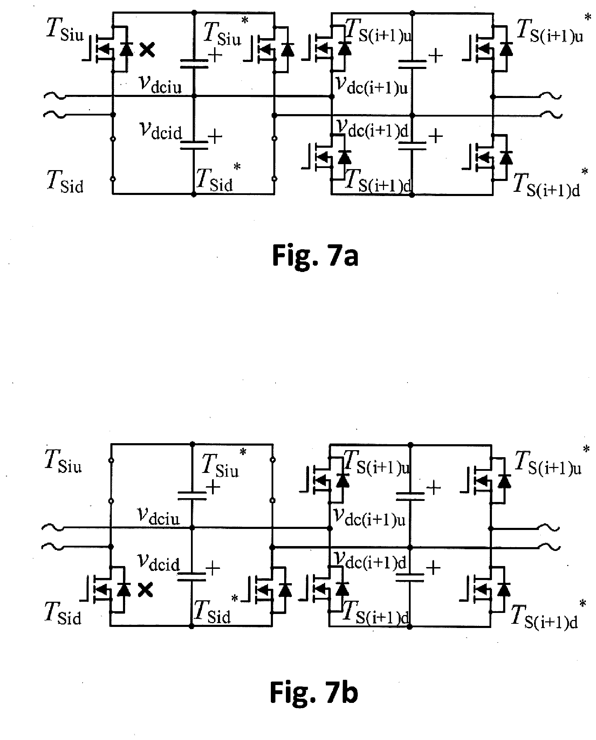

Figur 7a zeigt den ersten fehlertoleranten Zustand von kaskadierten modifizierten Halbbrückenwandlern nach erfindungsgemäßen Gesichtspunkten, in dem zwei benachbarte Module eingebaut sind. Im Falle des oberen aktiven Hauptschalters Tₛᵢᵤ Fehler sind T_{sid} und T_{sid}* eingeschaltet. Auf diese Weise ist es offensichtlich, dass das Modul (i) überbrückt wird. Beachten Sie jedoch, dass das Modul (i+I) seine Hauptschalter Tₛ₍ᵢ₊₁₎ᵤ und T_{s(i+1)d} nicht frei einschalten kann. Ebenso kann das Modul (i-1) seine Zusatzschalter Tₛ₍ᵢ₋₁₎ᵤ und T_{s(i-1)d} nicht frei einschalten.

Figur 7b zeigt den zweiten fehlertoleranten Zustand von kaskadierten modifizierten Halbbrückenwandlern nach erfindungsgemäßen Gesichtspunkten, in dem zwei benachbarte Module eingebaut sind. Im Falle des unteren aktiven Hauptschalters T_{Sid} Fehler sind Tₛᵢᵤ und Tₛᵢᵤ* eingeschaltet. Wiederum wird das Modul (i) überbrückt. Erwähnenswert ist, dass kaskadierte modifizierte Halbbrückenwandler wie bisher noch ohne Parallelität arbeiten können, wenn nur zusätzliche Schalter mit Sternchen (z. B. Tₛᵢᵤ*) zusammenbrechen.

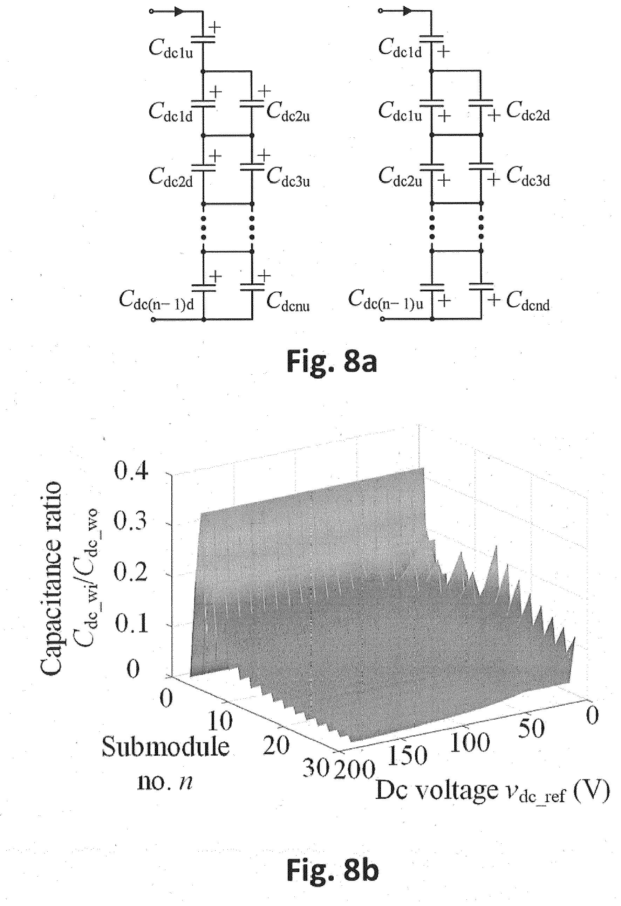

Figur 8a zeigt die Lade- und Entladebedingungen von kaskadierten modifizierten Halbbrückenwandlern nach erfindungsgemäßen Gesichtspunkten, wobei nur die Fälle negativer lac enthalten sind. Bemerkenswert ist, dass die Parität der Anzahl der Module n die Welligkeit der Kondensatoren und die Kapazitätsauslegung stark beeinflusst. Im Falle eines geraden n kann das Verhältnis der Kapazitätsersparnis als C_{dc_wi_even}/C_{dc_wo} = v_{ac_}ap/(4 nv_{dc_ref}) > 1/4 berechnet werden, wobei Cdc_wo und Cdc_wi_even sich auf die Kapazitätsanforderungen von konventionellen kaskadierten Halbbrückenwandlern bzw. erfindungsgemäßen kaskadierten modifizierten Wechselspannungen dar. Da nv_{dc_ref} größer als V_{ac_ap} sein sollte, um eine Übermodulation zu vermeiden, beträgt die Kapazitätsersparnis mindestens das Vierfache.

Im Falle eines ungeraden n kann das Verhältnis der Kapazitätseinsparung als C_{dc_wi_odd}/C_{dc_wo} = 1/n berechnet werden, wobei C_{dc_wi_odd} sich auf die Kapazitätsanforderung von erfindungsgemäßen kaskadierten modifizierten Halbbrückenwandlern bezieht, was deutlich darauf hinweist, dass die Einsparung linear mit der Anzahl der Teilmodule wächst.

Figur 8b stellt das Kapazitätseinsparungsverhältnis C_{dc_wi}/C_{dc_wo} als Funktion der Anzahl der Submodule n und der Gleichspannungsreferenz v_{dc_ref} dar, wobei die Wechselspannung fest ist. Offensichtlich ist die Kapazitätsverringerung immer größer als das Dreifache. In günstigen Fällen ist eine mehr als zehnfache Einsparung von Kapazität und gespeicherter Energie möglich. Im Vergleich dazu führt der Fall eines ungeraden n zu einer ausgeprägteren Einsparung als der Fall eines geraden n, wenn n groß und v_{dc_ref} klein ist.

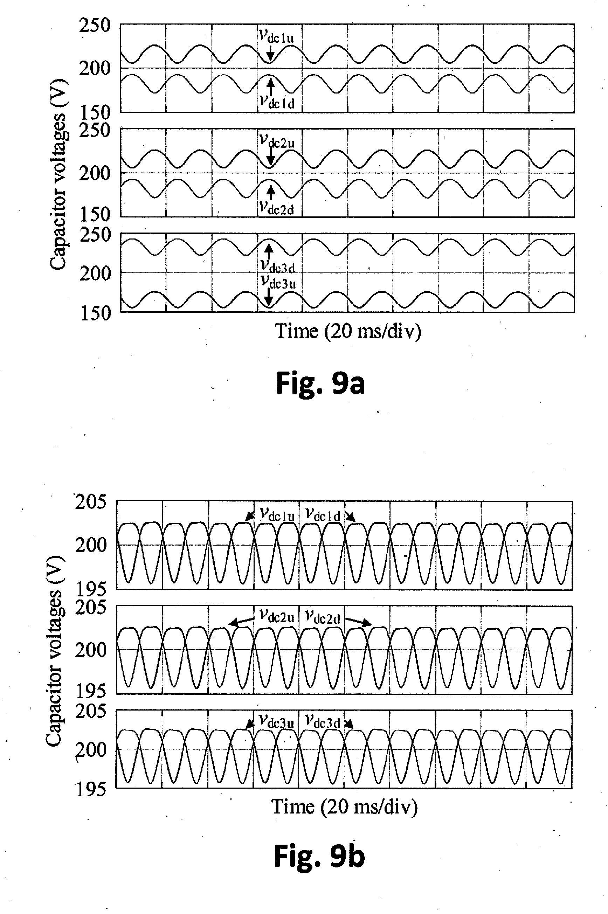

Figur 9a zeigt simulierte Gleichspannungen eines konventionellen kaskadierten Halbbrückenwandlers mit drei Modulen als STATCOM, wobei die Anfangsspannung eines Modulkondensators absichtlich 50 V größer als die nominale Gleichspannung v_{dc_ref} von 200 V ausgelegt ist, was zu einem Ungleichgewicht der oberen und unteren Kondensatorspannungen führt. Die Spannungsregler regulieren die Summen der oberenund unteren Kondensatorspannungen in jedem Untermodul auf ihre Referenzen. Die Spannungswelligkeit von Spitze zu Spitze erreicht 20,3 V.

Figur 9b zeigt simulierte Gleichspannungen eines kaskadierten modifizierten Halbbrückenwandlers mit drei Modulen als STATCOM nach erfindungsgemäßen Gesichtspunkten, wobei die Anfangsspannung eines Modulkondensators bewusst 50 V größer als die Nenngleichspannung v_{dc_ref} = 200 V ausgelegt ist. Offensichtlich gleicht der offenbarte Regler Spannungsunterschiede aus und erreicht einen Spannungsausgleich.

Darüber hinaus erreicht der Wandler eine dreimalige Reduzierung der Spannungswelligkeit von Spitze zu Spitze auf 6,8 V, was auf eine dreimalige Einsparung von Kapazität hindeutet.

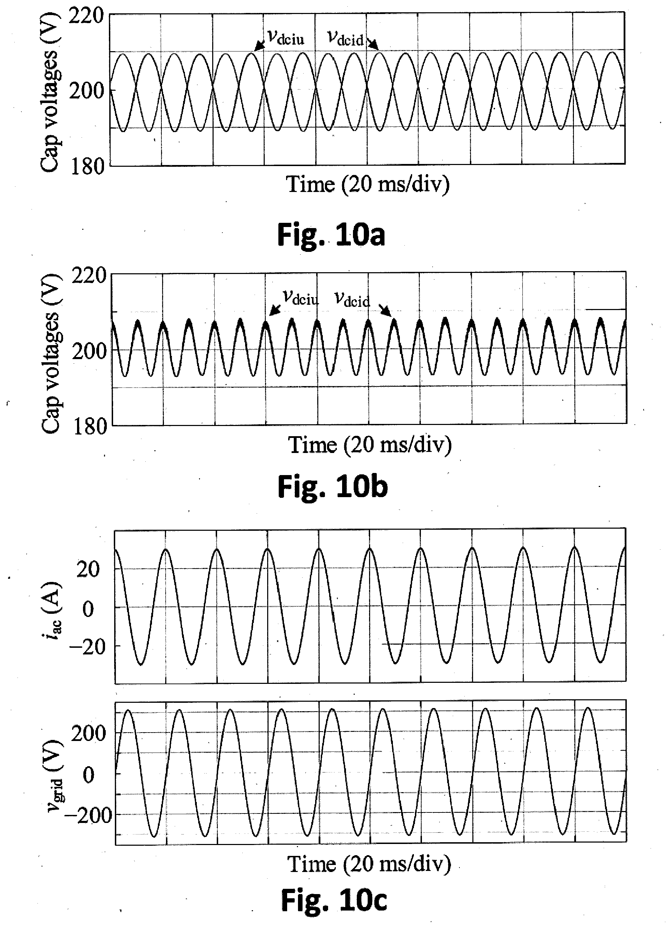

Figur 10a zeigt die simulierten Gleichspannungen eines konventionellen kaskadierten Halbbrückenwandlers mit vier Modulen, die als STATCOM arbeiten, wobei die Gleichstromkapazitäten 4,7 mF betragen. Bemerkenswert ist, dass die Spannungswelligkeit identisch mit dem Fall mit drei Modulen ist.

Figur 10b zeigt simulierte Gleichspannungen eines kaskadierten modifizierten Halbbrückenwandlers mit vier Modulen, der nach erfindungsgemäßen Gesichtspunkten als STATCOM arbeitet, wobei die Gleichstromkapazitäten 470 PF betragen. Mit einer zehnfachen Kapazitätsreduktion ermöglicht der erfindungsgemäße Regler eine Welligkeitsreduktion im Vergleich zum Fall von konventionellen kaskadierten Halbbrückenwandlern mit vier Modulen (siehe Figur 10a). Darüber hinaus wird die Periode der Spannungswelligkeit zu einer halben Leitungsperiode.

Figur 10c zeigt den simulierten Wechselstrom und die Netzspannung eines kaskadierten modifizierten Halbbrückenumrichters mit vier Modulen als STATCOM nach erfindungsgemäßen Gesichtspunkten. Die primären Ziele von STATCOMs liegen in der Blindleistungskompensation und Spannungsregelung. Um diese Ziele zu erreichen, gibt der kaskadierte modifizierte Halbbrückenumrichter einen einstellbaren Wechselstrom i_{ca} aus, der die Netzspannung V_{grid} um einen Winkel von etwa 90° führt.

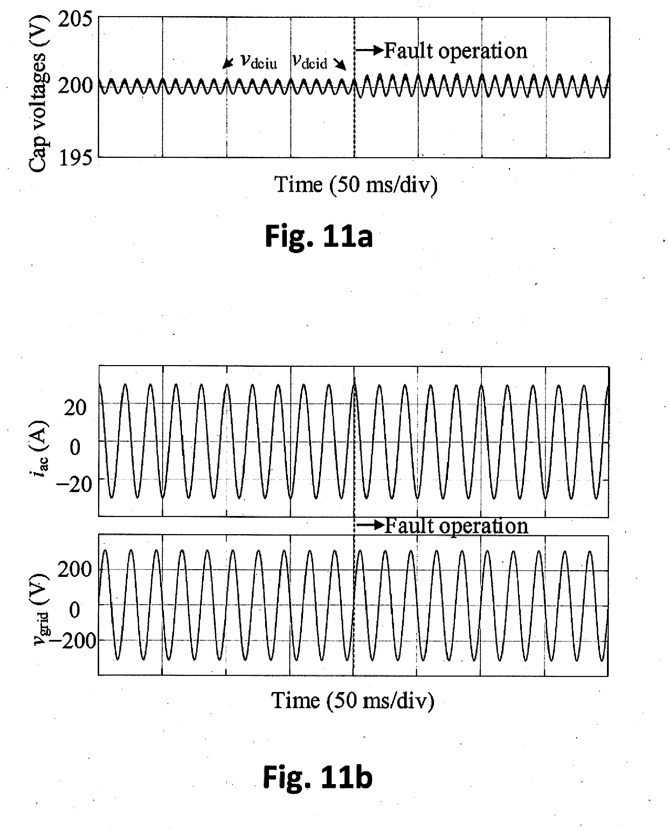

In Figur 11a sind simulierte Gleichspannungen eines kaskadierten modifizierten Halbbrückenwandlers mit sechs Modulen als STATCOM nach erfindungsgemäßen Gesichtspunkten dargestellt, wobei zwei Module überbrückt werden, um einen fehlertoleranten Betrieb zu demonstrieren. Diese Überbrückungsaktivität bewirkt eine Erhöhung der Spannungswelligkeit durch weniger funktionierende Module.

Figur 11b zeigt den simulierten Netzwechselstrom und die Netzspannung eines kaskadierten modifizierten Halbbrückenumrichters mit sechs Modulen als STATCOM nach erfindungsgemäßen Gesichtspunkten, wobei zwei Module zur Demonstration des Fehlerbetriebs überbrückt werden. Insbesondere stellt die Bypass-Aktivität keine Bedrohung für den normalen Betrieb von kaskadierten modifizierten Halbbrückenumrichtern als STATCOM dar.

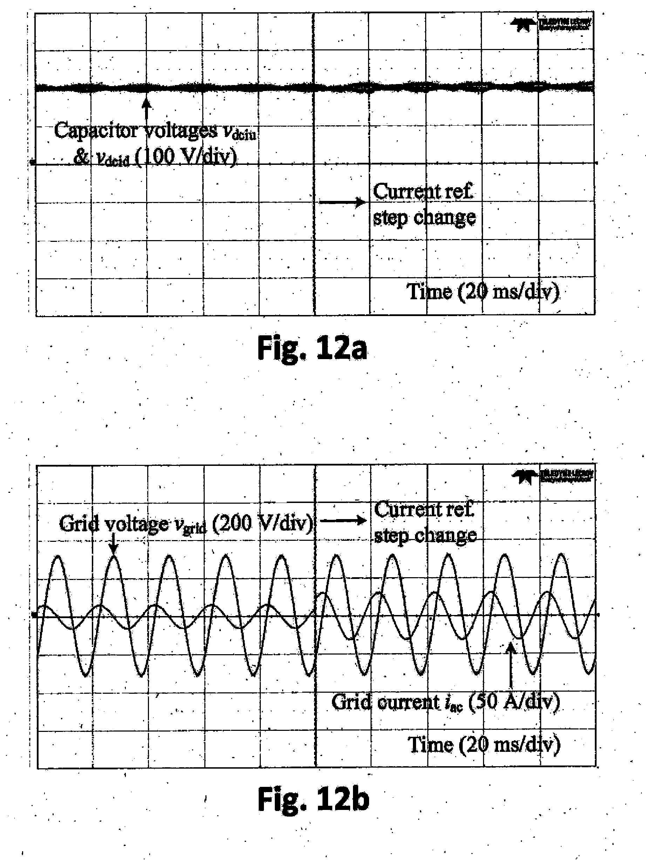

Figur 12a veranschaulicht experimentelle Gleichspannungen eines kaskadierten modifizierten Halbbrückenwandlers mit drei Modulen, der nach erfindungsgemäßen Gesichtspunkten als STATCOM arbeitet, wobei die Stromreferenz eine Aufwärtsänderung registriert. Diese Referenzveränderung bewirkt eine Erhöhung der Spannungswelligkeit aufgrund erhöhter Leistungsschwankungen.

Figur 12b zeigt den experimentellen AC-Netzstrom und die Netzspannung eines kaskadierten modifizierten Halbbrückenumrichters mit drei Modulen, der nach erfindungsgemäßen Gesichtspunkten als STATCOM arbeitet, wobei die Stromreferenz eine Aufwärtsänderung registriert. Bemerkenswert ist, dass die Änderung der Stromreferenz schnell implementiert werden kann, ohne dass der normale Betrieb von kaskadierten modifizierten Halbbrückenwandlern als STATCOMs gefährdet wird.

Eine bevorzugte Ausführungsform der Erfindung umfasst mindestens zwei modifizierte Halbbrückenmodule, die jeweils mindestens zwei Energiespeicherelemente (145, 146), mindestens vier Schaltelemente (141, 142, 143, 144) und mindestens drei Modulanschlüsse (147, 148, 149) umfassen. Wenigstens zwei der Schaltelemente (141, 142) sind in Reihe geschaltet, um wenigstens eine erste Halbbrücke zu bilden, und wenigstens zwei zweite der Schaltelemente (143, 144) sind in Reihe geschaltet, um wenigstens eine zweite Halbbrücke zu bilden, wobei der elektrische Verbindungspunkt der Schalter in der mindestens einen ersten Halbbrücke elektrisch mit mindestens einem ersten Modulanschluss (147) und der elektrische Verbindungspunkt der Schalter in der mindestens einen zweiten Halbbrücke elektrisch mit mindestens einem zweiten Modulanschluss (149) verbunden ist und die mindestens zwei Energiespeicherelemente (145, 146) in Reihe geschaltet sind und an ihrem elektrischen Verbindungspunkt mindestens einen dritten Anschluss (148) bilden.

In einer bevorzugten Ausführungsform der Erfindung ist vorgesehen, dass die mindestens eine erste Halbbrücke, die mindestens eine zweite Halbbrücke und die Reihenschaltung der mindestens zwei Energiespeicherelemente unter Bildung mindestens einer positiven Schiene (150) und mindestens einer negativen Schiene (151) elektrisch parallel geschaltet sind und dass die mindestens vier Schaltelemente (141, 142, 143, 144) derart schaltbar sind, dass sie jeden der mindestens drei Modulanschlüsse (147, 148, 149) einzeln und temporär mit der mindestens einen positiven Schiene (150) oder mit der mindestens einen negativen Schiene (151) elektrisch verbinden.

Die mindestens zwei modifizierten Halbbrückenmodule werden durch paarweise elektrische Verbindung von mindestens zwei Modulanschlüssen jedes modifizierten Halbbrückenmoduls elektrisch verbunden.

Einige oder alle der Schaltelemente (141, 142, 143, 144) können Halbleiterschalter sein. Diese Halbleiterschalter können z. B. Dioden oder Transistoren sein, wie bipolare Transistoren mit isoliertem Gate (IGBT) oder Feldeffekttransistoren (FET).

In einer anderen Ausführungsform der Erfindung können die mindestens zwei Energiespeicherelemente (145, 146) mindestens ein erstes Energiespeicherelement, das ein Kondensator ist, und ein zweites Energiespeicherelement, das eine Batterie ist, umfassen.

In einer alternativen Ausführungsform der Erfindung umfassen die mindestens zwei Energiespeicherelemente (145, 146) mindestens ein erstes Energiespeicherelement und ein zweites Energiespeicherelement, wobei die Nennspannung des ersten Energiespeicherelements weniger als drei Viertel der Nennspannung des zweiten Energiespeicherelements beträgt.

## Patentansprüche

1. Modulares Multilevelkonvertersystem mit mindestens zwei modifizierten Halbbrückenmodulen, die jeweils mindestens zwei Energiespeicherelemente (145, 146), mindestens vier Schaltelemente (141, 142, 143, 144) und mindestens drei Modulterminals (147, 148, 149) umfassen, **dadurch gekennzeichnet, dass** mindestens zwei der Schaltelemente (141, 142) elektrisch in Reihe geschaltet sind, um mindestens eine erste Halbbrücke zu bilden, und mindestens zwei zweite derSchaltelemente (143, 144) elektrisch in Reihe geschaltet sind, um mindestens eine zweite Halbbrücke zu bilden, wobei der elektrische Verbindungspunkt der Schalter in der mindestens einen ersten Halbbrücke mit mindestens einem ersten Modulanschluss (147) und der elektrische Verbindungspunkt der Schalter in der mindestens einen zweiten Halbbrücke mit mindestens einem zweiten Modulanschluss (149) elektrisch verbunden ist und die mindestens zwei Energiespeicherelemente (145, 146) elektrisch in Reihe geschaltet sind und an ihrem elektrischen Verbindungspunkt mindestens einen dritten Modulanschluss (148) bilden.

2. Modulares Multilevelkonvertersystem nach Anspruch 1, **dadurch gekennzeichnet, dass** die mindestens eine erste Halbbrücke, die mindestens eine zweite Halbbrücke und die Reihenschaltung der mindestens zwei Energiespeicherelemente elektrisch parallel geschaltet sind und mindestens eine positive Schiene (150) und mindestens eine negative Schiene (151) bilden und bei dem die mindestens vier Schaltelemente (141, 142, 143, 144) so aktiviert werden können, dass jeder der mindestens drei Modulanschlüsse (147, 148, 149) einzeln und vorübergehend mit der mindestens einen positiven Schiene (150) oder mit der mindestens einen negativen Schiene (151) elektrisch verbunden werden kann.

3. Modulares Multilevelkonvertersystem nach einem der vorstehenden Ansprüche, **dadurch gekennzeichnet, dass** jedes modifizierte Halbbrückenmodul mindestens vier Modulanschlüsse (147, 148, 149, 152) aufweist.

4. Modulares Multilevelkonvertersystem nach Anspruch 3, **dadurch gekennzeichnet, dass** mindestens zwei der mindestens vier Modulanschlüsse die gleiche elektrische Verbindung zu dem mindestens einen Verbindungspunkt zwischen den mindestens zwei in Reihe geschalteten Energiespeicherelementen (145, 146) teilen und bei dem diese mindestens zwei Modulanschlüsse elektrisch mit Modulanschlüssen von mindestens zwei verschiedenen anderen Modulen verbunden sind.

5. Modulares Multilevelkonvertersystem nach einem der vorstehenden Ansprüche, **dadurch gekennzeichnet, dass** die mindestens zwei modifizierten Halbbrückenmodule durch paarweise elektrische Verbindung von mindestens zwei Modulanschlüssen jedes modifizierten Halbbrückenmoduls elektrisch verbunden sind.

6. Modulares Multilevelkonvertersystem nach einem der vorstehenden Ansprüche, **dadurch gekennzeichnet, dass** das mindestens eine Schaltelement (141, 142, 143, 144) ein Halbleiterschalter ist,

7. Modulares Multilevelkonvertersystem nach einem der vorstehenden Ansprüche, **dadurch gekennzeichnet, dass** das mindestens eine Schaltelement (141, 142, 143, 144) eine Diode ist.

8. Modulares Multilevelkonvertersystem nach einem der vorstehenden Ansprüche, **dadurch gekennzeichnet, dass** das mindestens eine Schaltelement (141, 142, 143, 144) ein Transistor ist.

9. Modulares Multilevelkonvertersystem nach einem der vorstehenden Ansprüche, **dadurch gekennzeichnet, dass** die mindestens zwei Energiespeicherelemente (145, 146) Kondensatoren sind.

10. Modulares Multilevelkonvertersystem nach einem der vorhergehenden Ansprüche, **dadurch gekennzeichnet, dass** die mindestens zwei Energiespeicherelemente (145, 146) Batterien sind.

11. Modulares Multilevelkonvertersystem nach einem der vorstehenden Ansprüche, **dadurch gekennzeichnet, dass** die mindestens zwei Energiespeicherelemente (145, 146) mindestens ein erstes Energiespeicherelement, das ein Kondensator ist, und mindestens ein zweites Energiespeicherelement, das eine Batterie ist, umfassen.

12. Modulares Multilevelkonvertersystem nach einem der vorstehenden Ansprüche, **dadurch gekennzeichnet, dass** die mindestens zwei Energiespeicherelemente (145, 146) mindestens ein erstes Energiespeicherelement und ein zweites Energiespeicherelement umfassen und wobei die Nennspannung des ersten Energiespeicherelements weniger als drei Viertel der Nennspannung des zweiten Energiespeicherelements beträgt.
